# EUROPÄISCHE PATENTSCHRIFT

(11) **EP 2 788 126 B1**
(45) Veröffentlichungstag und Bekanntmachung des Hinweises auf die Patenterteilung: **01.11.2017**
(21) Anmeldenummer: 12770031.8
(22) Anmeldetag: 20.09.2012
(51) Int. Cl.: B05D 3/02, B05D 3/06, B05D 7/00

(54) **VERFAHREN ZUR HERSTELLUNG EINER SCHICHTANORDNUNG, SCHICHTANORDNUNG SOWIE DEREN VERWENDUNG**
METHOD FOR PRODUCING A COAT SYSTEM, COAT SYSTEM AND USE THEREOF
PROCÉDÉ POUR RÉALISER UN ENSEMBLE DE COUCHES, ENSEMBLE DE COUCHES ET SON UTILISATION

(30) Priorität: 08.12.2011 DE 102011056186
(43) Veröffentlichungstag der Anmeldung: 15.10.2014
(73) Patentinhaber: Surteco Decor GmbH, 86647 Buttenwiesen (DE)
(72) Erfinder: HALLER, Heinz, 73207 Plochingen (DE)
(74) Vertreter: Cohausz & Florack
(86) Internationale Anmeldenummer: PCT/EP2012/068521
(87) Internationale Veröffentlichungsnummer: WO 2013/083306

(56) Entgegenhaltungen:
- EP-A1- 1 923 211
- DE-A1-102004 034 790
- DE-U1-202006 007 317

## Beschreibung

Die Erfindung betrifft ein Verfahren zum Herstellen einer platten-, blatt- oder bahnförmigen, eine photokatalytisch wirksame Funktionsschicht aufweisenden Schichtanordnung gemäß dem Oberbegriff von Anspruch 1 sowie eine, insbesondere mit einem solchen Verfahren hergestellte Schichtanordnung gemäß Anspruch 11.

Photokatalytische Beschichtungen werden meist dazu verwendet, um organische Verschmutzungen in der Raumluft zu minimieren oder gänzlich zu eliminieren. Vorteilhaft werden solche Funktionsbeschichtungen dort eingesetzt, wo große Flächen der UV-Strahlung der Sonne oder künstlichen Lichtquellen ausgesetzt sind. Insbesondere können gute Effekte
durch die Beschichtung von Fenstergläsern oder Laminatböden erzielt werden. Auch ist die Anwendung von photokatalytisch wirksamen Substanzen in Tapetenfarben oder auf Teppichfasern Stand der Technik. Als photokatalytisch wirksame Substanz, d.h. als Katalysator wird dabei ein spezielles TiO₂-Pigment verwendet, welches oberflächenbehandelt ist und
je nach Anwendung mehr oder weniger fein dispergiert wird.

In der WO 2010/110726 A1 ist die Herstellung von katalytischen Funktionsbeschichtungen beschrieben. Die WO 2011/093785 A1 beschäftigt sich mit der Anwendung bei der Herstellung von Melaminbeschichtungen für Laminatböden.

In der DE 20 2006 007 317 U1 ist am Rande der Einsatz von katalytisch wirksamen Substanzen in dekorativen Bodenbelags-Beschichtungsfolien beschrieben, wobei die katalytisch wirksame Substanz Teil einer Deckschicht ist, die auf einer abrasive Partikel aufweisenden Basisschicht vorgesehen ist, welche wiederum auf ein Substrat aus Papier und/oder Kunststoff aufgebracht ist. Alternativ ist in der DE 20 2006 007 317 U1 das Vorsehen der katalytischen Substanz in einer Zwischenschicht zwischen der vorerwähnten Deckschicht und der Basisschicht beschrieben - in diesem Fall bildet die katalytische Funktionsschicht keine äußerste Schicht der bekannten Schichtanordnung.

Bekannte Schichtanordnungen haben häufig das Problem, dass die photokatalytisch wirksame Substanz nur unvollständig dispergiert ist und große Agglomerate der nanoskaligen Substanz zu Lichtstreuung führen, was die Oberfläche milchig und trübe erscheinen lässt. Die katalytische Substanz kann auch das Bindemittel in der sie eingebettet ist angreifen, was zu einer Vergrauung führen kann. Beide Phänomene sind insbesondere dann von Nachteil, wenn die gesamte Schichtanordnung transparent sein soll, beispielsweise um sie zum Beschichten von Fensterglasscheiben zu benutzen. Auch ist die chemische Wechselwirkung zwischen der photokatalytischen Substanz und des diese umgebenden Bindemittels nachteilig, wenn ein dekoratives Substrat durch die darüber befindlichen Schichten hindurch ungetrübt zu sehen sein soll, beispielsweise um die Schichtanordnung als Beschichtungsfolie für Möbel od.dgl. einsetzen zu können.

Aus der gattungsgemäßen DE 10 2004 034 790 A1 ist ein Verfahren zum Herstellen einer platten-, blatt- oder bahnförmigen und einer photokatalytisch wirksamen Funktionsschicht aufweisenden Schichtanordnung bekannt. Die photokatalytische Wirksamkeit ist verbesserungswürdig.

Die EP 1 923 211 A1 offenbart die Möglichkeit einer gemeinsamen Vernetzung einer Deckschicht und einer Basisschicht einer Schichtanordnung. Dabei enthält die Deckschicht keine Funktionszusätze. Funktionszusätze sind in einer fakultativ vorgesehenen Zwischendeckschicht und Basisschicht vorgesehen, so dass die Schichtanordnung nicht photokatalytisch aktiv sein kann.

Die WO 2011/093785 A1 zeigt eine Schichtanordnung mit einer photokatalytisch wirksamen Schicht als eine äußerste Schicht. Die photokatalytische Wirksamkeit ist verbesserungswürdig.

Ausgehend von dem vorgenannten Stand der Technik liegt der Erfindung die Aufgabe, zugrunde, ein Verfahren zum Herstellen einer platten-, blatt- oder bahnförmigen, eine photokatalytisch wirksame Funktionsschicht aufweisenden Schichtanordnung anzugeben, bei der zum einen ein hohes Maß an Haftung zwischen der Funktionsschicht und einer darunter befindlichen Deckschicht gegeben ist, damit die Schichtanordnung auch hohen mechanischen Anforderungen trotzen kann. So soll beispielsweise die Funktionsschicht nicht durch Wischen und haushaltsübliche Reiniger entfernt werden können. Darüber hinaus soll möglichst ein Vergrauen der Funktionsschicht durch Wechselwirkung der photokatalytisch wirksamen Substanz mit einem Bindemittel der Funktionsschicht vermieden werden. Zudem soll eine hohe katalytische Aktivität sichergestellt werden.

Ferner besteht die Aufgabe darin eine entsprechend verbesserte Schichtanordnung anzugeben.

Diese Aufgabe wird hinsichtlich des Verfahrens mit den Merkmalen des Anspruchs 1, hinsichtlich der Schichtanordnung mit den Merkmalen des Anspruchs 11 sowie durch eine Verwendung gemäß Anspruch 12 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, entweder unmittelbar auf einem zu beschichtenden, dekorativen oder transparenten Substrat oder alternativ auf mindestens einer zuvor auf dem Substrat erzeugten Basisschicht einen lösungsmittelfreien Decklack aufzubringen, der später eine Decklackschicht bildet, die vorzugsweise Ansprüche hinsichtlich einer guten chemischen und mechanischen Beanspruchbarkeit sowie ggf. Anforderungen an Glanz und evtl. Farbe erfüllt. Als strahlenhärtbares Bindemittel kann der Decklack beispielsweise Polyester-, Urethan-, Epoxiacrylate oder Mischungen aus diesen Substanzen umfassen, insbesondere mit einem Anteil aus einem Gew.-% Bereich zwischen 10% und 90%, bezogen auf das Nassauftragsgewicht des Decklacks. Um besonders gute mechanische und chemische Eigenschaften zu erzielen, kann bei Bedarf als Decklack auch ein Nanokompositlack eingesetzt werden. Ebenso können bei Bedarf als Pigmente organische Pigmente und/oder anorganische Pigmente wie Titandioxid und/oder Eisenoxidpigmente eingesetzt werden. Erfindungsgemäß wird der aufgebrachte Decklack in einem Verfahrensschritt teilweise gehärtet (teilweise vernetzt). Dies geschieht durch Bestrahlen des Decklacks und dabei Vorvernetzen, d.h. nicht vollständiges Vernetzen des strahlenhärtbaren Bindemittels des Decklacks. Hierunter wird verstanden, dass das strahlenhärtbare Bindemittel mit UV-Licht und/oder Elektronenstrahlung so vorvernetzt wird, dass noch ausreichend viele Doppelbindungen für eine spätere radikalische Polymerisierung vorhanden sind. Bevorzugt erfolgt die Vernetzung bis zu einem Polymerisierungsgrad zwischen 20% und 50%. Bei einer UV-Bestrahlung kann die Aushärtung des Lacks durch den Anteil des notwendigen Fotoinitiators und/oder durch die Strahlendosis gesteuert werden. Bei einer Elektronenbestrahlung wird der Grad der Vorvernetzung durch die Strahlendosis gesteuert, da keine Photoinitiatoren zur Aushärtung des Decklacks notwendig und vorzugsweise auch nicht vorhanden sind. Der Decklack kann transparent oder pigmentiert sein. Der Decklack kann beispielsweise durch Sprühen, Gießen oder Drucken, insbesondere mittels einer Walzenbeschichtungsvorrichtung aufgebracht werden. Vorzugsweise wird der Decklack in einer Dicke zwischen 5 µm und 30 µm, vorzugsweise zwischen 8 µm und 15 µm aufgetragen.

In einem weiteren erfindungsgemäßen Verfahrensschritt wird auf den vorvernetzten, nicht ausgehärteten Decklack ein Funktionslack zum Erzeugen der photokatalytischen Funktionsschicht, beispielsweise durch Gie-βen, Sprühen oder Drucken, insbesondere mittels einer Tiefdruckeinrichtung aufgebracht, wobei dieser Funktionslack neben mindestens einer photokatalytisch wirksamen Substanz ein wässriges, physikalisch trockenbares und strahlenhärtbares Bindemittel enthält. Als Bindemittel können im Funktionslack beispielsweise wässrige Urethandispersionen eingesetzt werden. Ganz besonders bevorzugt wird der Funktionslack in einer Schichtdicke zwischen 0,5 µm und 3 µm, vorzugsweise zwischen 0,7 µm und 1,2 µm aufgetragen.

In einem weiteren Verfahrensschritt wird dann erfindungsgemäß der Funktionslack physikalisch, insbesondere thermisch, getrocknet, vorzugsweise so weit, bis der Funktionslack klebfrei ist.

In einem weiteren erfindungsgemäßen Verfahrensschritt erfolgt dann das gemeinsame Bestrahlen des Decklacks und des darauf befindlichen Funktionslackes, mit UV-Strahlen und/oder Elektronenbestrahlung, wodurch die in den vorgenannten Lacken enthaltenen strahlenhärtbaren Bindemittel weiter vernetzt, insbesondere ausgehärtet werden. Nach dem gemeinsamen Bestrahlen liegt die photokatalytische Substanz physikalisch eingebunden (nicht chemisch gebunden) in dem Bindemittel der Funktionsschicht vor, wobei die Substanz bevorzugt zum Teil bereits an die Außenoberfläche tritt bzw. diese bildet.

Aus dem erfindungsgemäßen Verfahren resultiert eine für die unterschiedlichsten Anwendungen einsetzbare Schichtanordnung, die sich durch eine Vielzahl von vorteilhaften Eigenschaften auszeichnet. So ist die aus dem Verfahren resultierende Schichtanordnung äußerst strapazierfähig, was zurückzuführen ist auf die gute Haftung bzw. Bindung zwischen Funktionsschicht und Decklackschicht. Diese ist wiederum zurückzuführen auf die Tatsache, dass Funktionsschicht und Decklackschicht in einem gemeinsamen Bestrahlungsschritt ausgehärtet werden, so dass es zu einer Vernetzung zwischen den strahlenhärtbaren Bindemitteln des Funktionslackes und den strahlenhärtbaren Bindemitteln des Decklacks kommt. Darüber hinaus wird durch die Einbindung der photokatalytisch wirksamen Substanz in ein, vorzugsweise ausschließlich, strahlengehärtetes Bindemittel eine äußerst feste Struktur geschaffen, in welcher das Bindemittel aufgrund der Strahlenhärtung zu einem besonders festen Polymer polymerisiert ist, welches durch die gute Vernetzung weitgehend unempfindlich ist gegen die katalytische Aktivität der katalytisch wirksamen Substanz. Eine Vergrauung der angrenzenden Decklackschicht bzw. eines Grenzbereichs dieser Schicht wird aus dem gleichen Grunde minimiert - hier ist aufgrund der, vorzugsweise ausschließlichen, Strahlenhärtung eine besonders feste und widerstandsfähige Polymerstruktur geschaffen worden.

Bevorzugt sind Funktionslack und/oder Decklack frei von nicht strahlenhärtbaren Bindemitteln.

Die Partikelgröße der photokatalytisch wirksamen Substanz, insbesondere von TiO₂ ist mit Vorteil so gewählt, dass diese kleiner als die Wellenlänge des sichtbaren Lichtes ist, um eine Lichtstreuung und damit einen Weißfärbeeffekt zu vermeiden. Bevorzugt beträgt die maximale Korngröße der Substanz, insbesondere TiO₂ weniger als 300 nm, vorzugsweise weniger als 200 nm. Weiter vorteilhaft ist es, wenn die mittlere Korngröße der Substanz kleiner ist als 100 nm, vorzugsweise kleiner ist als 75 nm. Als besonders vorteilhaft hat es sich herausgestellt, wenn die Substanz kohlenstoffbeschichtet ist, wodurch erreicht wird, dass die Substanz auch bei kurzwelligem Tageslicht, nicht nur im UV-Bereich katalytisch aktiv ist. Ganz besonders bevorzugt kann die Substanz wie in der WO 2005/108505 A1 beschrieben ausgebildet werden, deren Offenbarungsgehalt diesbezüglich als zur vorliegenden Anmeldung gehörig offenbart gelten soll.

Um die katalytische Aktivität der Funktionsschicht zu optimieren, ist in Weiterbildung der Erfindung mit Vorteil als Verfahrensschritt vorgesehen, nach dem Trocknen des Funktionslackes und vor dem endgültigen Aushärten des Funktionslackes und des Decklackes den getrockneten Funktionslack einer Oberflächenbehandlung zu unterziehen, durch welche (zusätzlich) photokatalytisch wirksame Substanz freigelegt bzw. an die Oberfläche gebracht wird. Hierzu wird im Rahmen der Oberflächenbehandlung Bindemittel (teilweise bereits polymerisiert) des getrockneten Funktionslackes entfernt, um somit photokatalytisch wirksame Pigmente freizulegen.

Als besonders vorteilhaft hat es sich erwiesen als Oberflächenbehandlungsschritt eine Koronabehandlung vorzusehen, wobei die Koronabehandlung vorzugsweise so eingestellt wird, dass der unterhalb des getrockneten Funktionslackes befindliche, vorvernetzte Decklack hinsichtlich seiner weiteren Vernetzbarkeit nicht geschädigt wird. Dies kann beispielsweise durch eine Koronaleistung von etwa 4 kW/m erreicht werden. Zusätzlich oder alternativ zu einer Koranabehandlung können andere geeignete Oberflächenschritte zum Freilegen im Bindemittel eingehüllte katalytisch wirksame Substanzen eingesetzt werden, so beispielsweise eine Plasmabehandlung.

Wie eingangs erwähnt, gibt es grundsätzlich unterschiedliche Möglichkeiten zur Vorvernetzung des Decklackes durch Bestrahlen. So ist es im Falle des Vorsehens von Photoinitiatoren im Decklack möglich, die Vorvernetzung mittels UV-Bestrahlung durchzuführen, wobei der Vernetzungsgrad durch die Menge an Photoinitiatoren und/oder die Strahlendosis gesteuert werden kann. Zusätzlich oder bevorzugt alternativ kann das Vorvernetzen mittels Elektronenbestrahlung erfolgen, wobei hier das Vorvernetzen über die Wahl der Strahlendosis erfolgen kann. Besonders bevorzugt werden bei der Vorvernetzungsbestrahlung zwischen 10% und 50%, vorzugsweise zwischen 20% und 30% Polymerisierungsgrad des strahlenhärtbaren Bindemittels des Decklacks erreicht.

Ebenso kann die gemeinsame Aushärtung von Funktionslack und Decklack im Falle des Vorsehens von Photoinitiatoren in beiden Lacken mittels UV-Bestrahlung erfolgen sowie zusätzlich oder bevorzugt alternativ mittels Elektronenbestrahlung. Im Falle der Elektronenbestrahlung hat sich eine Dosisleistung der Elektronenbestrahlung von 30 kGy als vorteilhaft herausgestellt. Bevorzugt wird so ausgehärtet, dass ein Polymerisierungsgrad von größer 80%, vorzugsweise größer 90%, ganz besonders bevorzugt von näherungsweise 100% des Bindemittels der Decklackschicht und/oder der Funktionssicht erreicht wird.

Ganz besonders zweckmäßig ist es, wenn der Verfahrensschritt der physikalischen, insbesondere thermischen Trocknung des Funktionslackes zeitlich vor einer gemeinsamen Bestrahlung von Funktionslack und Decklack so ausgeführt wird, dass der Funktionslack nach dem thermischen Trocknen klebfrei ist. Besonders bevorzugt wird der Funktionslack soweit getrocknet, dass dieser einen Restfeuchtigkeitsgehalt von weniger als 5 Gew.-%, vorzugsweise weniger als 4 Gew.-%, noch weiter bevorzugt weniger als 3 Gew.-%, ganz besonders bevorzugt weniger als 2 Gew.-%, ganz besonders bevorzugt weniger als 1 Gew.-%, bezogen auf das Gewicht des aufgebrachten Funktionslackes aufweist. Durch den Trocknungsvorgang wird das Ergebnis der fakultativen, jedoch bevorzugten Oberflächenbehandlung, insbesondere Koronabehandlung, verbessert. Insbesondere wird ein blitzartiges Verdampfen von Wasser während der Behandlung und damit ein Mitreißen weiterer Substanzen verhindert, was sich auch auf die Oberflächenqualität auswirkt.

Das Substrat kann zu Beschichtungszwecken in unterschiedlicher Gestalt vorliegen. Besonders vorteilhaft ist eine Ausführung des Verfahrens, bei der das Substrat als Substratbahn vorliegt, insbesondere als Papierbahn, Kunststoffbahn, Metallbahn oder Verbundmaterialbahn, vorzugsweise umfassend mindestens eines der vorgenannten Materialien. Alternativ ist es möglich, dass das Substrat endlich in Plattenform vorliegt, beispielsweise als Papierplatte, Holzwerkstoffplatte, Kunststoffplatte, Metallplatte oder Verbundmaterialplatte, umfassend mindestens eines der vorgenannten Materialien. Anstelle von vergleichsweise dicken Platten mit einer Dicke von vorzugsweise größer als 500pm, oder größer als 1 mm kann das Substrat auch in Blattform vorliegen, wobei hier die Dickenerstreckung bevorzugt deutlich kleiner ist als 500pm, insbesondere kleiner als 200 µm.

Besonders zweckmäßig ist es das Verfahren inline durchzuführen, zumindest dass die Schritte des Aufbringens des Decklackes, ggf. - falls vorgesehen - auch das Aufbringen mindestens eines fakultativen Basislackes unterhalb des Decklackes, das Aufbringen des Funktionslackes, das Trocknen sowie das Aushärten inline durchgeführt werden, wobei sich für eine inline-Verfahrensweise insbesondere Substrat in Bahnform eignet, da dieses dann von Rolle auf Rolle (von Coil zu Coil) gearbeitet werden kann.

Um eine gute optimale photokatalytische Aktivität zu erreichen ist es zweckmäßig, wenn der Funktionslack eine Menge an katalytischer Substanz enthält und in einer solchen Dicke aufgetragen wird, dass eine Menge der photokatalytischen Substanz pro Fläche zwischen etwa 0,2 g/m² und 3 g/m², vorzugsweise von etwa 1 g/m² in der Schichtanordnung resultiert.

Im Hinblick auf die Wahl der photokatalytischen wirksamen Substanz hat es sich als vorteilhaft herausgestellt spezielle, beschichtete Titandioxidtypen einzusetzen, wobei diese vorzugsweise nanoskalig vorliegen. Ganz besonders bevorzugt beträgt die mittlere Partikelgröße zwischen 70 nm und 20 nm. Ganz besonders bevorzugt liegt das Titandioxid in Form von Primärteilchen vor. Primärteilchen sind einzelne Teilchen, die nicht agglomeriert sind und sich durch rühren oder heftiges Dispergieren nicht mehr zerkleinern lassen.

Wie eingangs erläutert, ist es grundsätzlich möglich, beispielsweise für Anwendungen, in denen die Schichtanordnung als Beschichtungsfolie zum Beschichten von Möbeln od.dgl. eingesetzt werden soll, den Decklack unmittelbar auf das Substrat aufzubringen. Alternativ kann zwischen Decklack und Substrat mindestens eine Schicht aus einem Basislack vorgesehen werden. In diesem Fall wird der Decklack also vorzugsweise auf den zuvor aufgebrachten Basislack aufgebracht, der weiter bevorzugt strahlenhärtbares Bindemittel enthält und vor dem Auftragen des Decklackes vorvernetzt, d.h. nicht ausgehärtet wird, und zwar durch Bestrahlung, insbesondere um den Basislack zusammen mit dem Decklack und dem Funktionslack am Ende des Verfahrens gemeinsam auszuhärten. Auch ist es denkbar den Basislack vor dem Aufbringen des Decklackes vollständig auszuhärten. Der Basislack kann bei Bedarf abrasive Füllstoffe aufweisen, insbesondere in einer an die, vorzugsweise abrasive Partikel umfassenden Decklackschicht angrenzenden Schicht. Bei Bedarf kann neben einer abrasive Füllstoffe, z.B. Korund, aufweisenden Basisschicht eine weitere Basisschicht ohne abrasive Füllstoffe vorgesehen sein.

Die Erfindung führt auch auf eine vorzugsweise, jedoch nicht zwingend mit einem nach dem Konzept der Erfindung hergestellten Verfahren hergestellten Schichtanordnung, umfassend eine (äußere) photokatalytisch wirksame Funktionsschicht, eine daran angrenzende Decklackschicht und ein dekoratives oder transparentes Substrat, wobei die Deckschicht und die Funktionsschicht jeweils strahlengehärtetes (polymerisiertes) Bindemittel umfassen und wobei die strahlengehärteten Bindemittel von Funktionsschicht und Decklackschicht untereinander, miteinander vernetzt sind.

Die Oberfläche (Funktionsschicht) der erfindungsgemäßen Schichtanordnung hat eine hervorragende photokatalytische Effizienz, insbesondere wenn diese während der Herstellung einer Oberflächenbehandlung, insbesondere einer Koronabehandlung zum (teilweisen) Abtragen von strahlenhärtenden, vorzugsweise zum Teil schon gehärtetem Bindemittel aus der Funktionsschicht, insbesondere vor einem Trocknungsvorgang unterzogen wurde.

Die Schichtanordnung umfasst ein Substrat, welches insbesondere für Anwendungen auf Fenstergläsern transparent sein kann, insbesondere in Form einer transparenten Folie, beispielsweise einer Polyesterfolie. Insbesondere, jedoch nicht ausschließlich, für die Verwendung der Schichtanordnung als Beschichtungsfolie zum Beschichten von Oberflächen ist es vorteilhaft ein dekoratives Substrat einzusetzen, welche einfarbig oder mehrfarbig ausgestaltet sein kann, insbesondere kann die Dekoration in Form eines, bevorzugt gedruckten dekorativen Musters ausgebildet sein.

Die erfindungsgemäße Schichtanordnung ist insbesondere transparent, vorzugsweise derart, dass im Falle der Ausbildung des Substrates als dekoratives Substrat dieses durch die darüber befindlichen Schichten optimal betrachtet werden kann. Für den Einsatz auf Glasfenstern muss zusätzlich das Substrat transparent sein, um insgesamt durch die Schichtanordnung hindurchschauen zu können. Die Schichtanordnung kann einen transparenten Schutz gegen Wasser und haushaltsübliche Chemikalien darstellen und hat trotz einer hohen Transparenz zumindest der Lackschicht und der Deckschicht nach wie vor gute Chemikalienresistenzeigenschaften.

Für die Verwendung der Schichtanordnung als Möbelfolien, d.h. zum Kaschieren von Möbeln, ist es vorteilhaft, wenn es sich bei dem Substrat um ein vorbehandeltes bedrucktes Papier handelt. Solche Beschichtungsfolien können beispielsweise auf Spanplatten oder Faserplatten mittlerer oder hoher Dichte kaschiert werden. Auch ist es möglich, Wand- und Deckenpaneelen zu kaschieren. Bei allen Anwendungen ist es vorteilhaft, wenn diese innerhalb einer Wohnung eingesetzt werden und größere Flächen zur Verfügung stellen, die belichtet sind und mit Raumluft in Kontakt stehen.

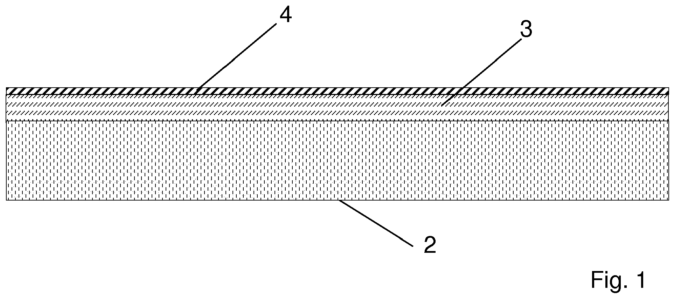

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in der einzigen Fig. 1 ein schematisches Schichtaufbaudiagramm als seitliche Schnittansicht durch ein Ausführungsbeispiel einer erfindungsgemäßen dekorativen oder vollständig transparenten Schichtanordnung 1.

In Fig. 1 ist eine mögliche Ausführungsform einer Schichtanordnung 1 gezeigt, die - insbesondere je nach Ausgestaltung eines Substrates 2 für unterschiedliche Anwendungen eingesetzt werden kann. Es ist möglich, das Substrat 2 als dekoratives Substrat 2 oder als transparentes Substrat 2 auszubilden. Auch ist es möglich alternativ eine bahn- oder blattförmige, d.h. heißt sehr dünne, flexible Substratvariante zu wählen, oder ein vergleichsweise starres blättchenförmiges Substrat 2. In dem gezeigten Ausführungsbeispiel handelt es sich bei dem Substrat 2 um ein blatt- oder bahnförmiges Substrat, insbesondere ein Papier oder eine Folie. Die Dickenerstreckung beträgt etwa 30µm bis 100µm.

In dem gezeigten Ausführungsbeispiel befindet sich unmittelbar auf dem Substrat 2 eine Decklackschicht 3, umfassend ein ausgehärtetes, strahlenvernetztes Bindemittel. Auf dieser Decklackschicht 3 befindet sich als äußerste Schicht eine photokatalytische wirksame Funktionsschicht 4, ebenfalls umfassend ein strahlgehärtetes Bindemittel, wobei die strahlengehärteten Bindemittel der Schichten 3 und 4 in einem Übergangs- bzw. Grenzflächenbereich miteinander vernetzt sind.

Bei einer alternativen, nicht dargestellten Ausführungsform einer Schichtanordnung 1 kann zwischen dem Substrat 2 und der Decklackschicht 3 eine, vorzugsweise strahlengehärtete, Basisschicht vorgesehen werden.

In dem gezeigten Ausführungsbeispiel hat die Funktionsschicht 4 eine Dickenerstreckung (Stärke von etwa 1µm). Die Decklackschicht hat eine Dickenerstreckung von etwa von 10µm.

Eine typische Rezeptur zur Herstellung eines UV-härtbaren Decklackes zur Herstellung der Decklackschicht 3 lautet wie folgt:
Oligomer (z.B. Ebecryl 952) 100 Teile,
Monomer (z.B. HDDA) 10 Teile,
Haftvermittler (z.B. Ebecryl 168) 3 Teile,
Photoinitiator (z.B. Darocure 1173) 3 Teile.

Bevorzugt wird der Decklack mit einem Auftragsgewicht von 10g/m² aufgebracht. Bevorzugt erfolgt die Vorvernetzung durch UV-Härtung mit einer Dosisleistung von etwa 80 bis 120W/cm, insbesondere ohne Inertisierung mit Stickstoff.

Eine typische Rezeptur zur Herstellung eines UV-härtbaren Funktionslackes lautet wie folgt:
Wässriges Bindemittel (z.B. Ucecoat 7773) 25 Teile,
Funktionsdispersion (z.B. Kronoclean 7000 30%ig in Wasser) 25 Teile,
Verdünner (z.B. Wasser) 50 Teile.

Bevorzugt beträgt das Auftragsgewicht (nass) etwa 10 g/m². Die Trocknung erfolgt bevorzugt bei 140°C bis zu einer Restfeuchte von weniger als 3 Gew.-%.

Bevorzugt wird eine Oberflächenbehandlung des getrockneten, noch nicht durchgehärteten (ausgehärteten) Funktionslackes bei 4KW/m durchgeführt. Die finale Aushärtung des funktionalen Lackes sowie des Decklackes wird bevorzugt mit Elektronenbestrahlung mit einer Dosisleistung von 30 kGy durchgeführt.

Anstelle des vorerwähnten UV-härtbaren Funktionslackes und/oder anstelle des vorerwähnten UV-härtbaren Decklackes können/kann ein Elektronenstrahl härtbarer Funktionslack und/oder ein Elektronenstrahl härtbarer Decklack eingesetzt werden. Diese können beispielsweise die gleiche Rezeptur aufweisen, wie die vorerwähnten Lacke, bis auf den Verzicht von Photoinitiatoren. Bevorzugt wird bei der Polymerisation durch Elektronenstrahlen eine Inertgasatmosphäre eingesetzt, da ansonsten der Luftsauerstoff sich an die Doppelbindungen der Oligomere anlagern und eine Verbindung der Polymere (Polymerisation) blockieren würde. Als Inertgas kann beispielsweise Stickstoff eingesetzt werden.

### Bezugszeichenliste

- 1: Schichtanordnung
- 2: Substrat
- 3: Decklackschicht
- 4: Funktionsschicht

## Patentansprüche

1. Verfahren zum Herstellen einer platten-, blatt- oder bahnförmigen, eine photokatalytisch wirksame Funktionsschicht (4) aufweisenden Schichtanordnung mit den Schritten:
Bereitstellen eines zu beschichtenden, dekorativen oder transparenten Substrates;
Aufbringen eines lösemittelfreien Decklacks, umfassend ein strahlenhärtbares Bindemittel, zum Erzeugen einer Decklackschicht (3);
Aufbringen eines eine photokatalytisch wirksame Substanz sowie ein wässriges, trocknenbares sowie strahlenhärtbares Bindemittel umfassenden Funktionslacks zum Erzeugen der photokatalytisch wirksamen Funktionsschicht (4);
gemeinsame Bestrahlung des Decklacks und des Funktionslacks und dadurch Weitervernetzen, insbesondere Aushärten des jeweiligen strahlenhärtbaren Bindemittels, **dadurch gekennzeichnet, dass**
das strahlenhärtbare Bindemittel des Decklacks durch Bestrahlen vorvernetzt, jedoch nicht ausgehärtet wird, und dass der Funktionslack vor der gemeinsamen Bestrahlung des Decklacks des Funktionslacks physikalisch getrocknet wird, und
dass der getrocknete Funktionslack vor dem Aushärten einer Oberflächenbehandlung in Form einer Koronabehandlung und/oder einer Plasmabehandlung unterzogen wird, bei der Bindemittel des getrockneten Funktionslacks entfernt wird.

2. Verfahren nach Anspruch 1,
**dadurch gekennzeichnet,**
**dass** der Decklack Photoinitiatoren umfasst und das Vorvernetzen mittels UV-Bestrahlung erfolgt und/oder dass das Vorvernetzen mittels Elektronenbestrahlung erfolgt.

3. Verfahren nach einem der Ansprüche 1 oder 2,
**dadurch gekennzeichnet,**
**dass** der Decklack Photoinitiatoren enthält und das Aushärten mittels UV-Bestrahlung erfolgt und/oder dass das Aushärten mittels Elektronenbestrahlung erfolgt.

4. Verfahren nach einem der vorhergehenden Ansprüche,
**dadurch gekennzeichnet,**
**dass** der Funktionslack so thermisch getrocknet wird, dass er klebfrei ist, insbesondere auf einen Restfeuchtigkeitsgehalt von weniger als 5 Gew.-%, vorzugsweise weniger als 4 Gew.-%, noch weiter bevorzugt weniger als 3 Gew.-%, besonders bevorzugt weniger als
2 Gew.-%, ganz besonders bevorzugt weniger als 1 Gew.-%, jeweils bezogen auf das Gewicht des aufgebrachten Funktionslacks.

5. Verfahren nach einem der vorhergehenden Ansprüche,
**dadurch gekennzeichnet,**
**dass** das Substrat (2) als Papierbahn, Kunststoffbahn, Metallbahn, Laminatbahn oder als Papierplatte, Holzwerkstoffplatte, Kunststoffplatte, Metallplatte oder Laminatplatte bereitgestellt wird.

6. Verfahren nach einem der vorhergehenden Ansprüche,
**dadurch gekennzeichnet,**
**dass** das Aufbringen des Decklacks, das Vorvernetzen, das Aufbringen des Funktionslacks, das Trocknen sowie das Aushärten inline durchgeführt werden.

7. Verfahren nach einem der vorhergehenden Ansprüche,
**dadurch gekennzeichnet,**
**dass** der Funktionslack eine Menge an katalytischer Substanz enthält und in einer solchen Dicke aufgetragen wird, dass eine Menge der Substanz pro Fläche zwischen etwa 0,2 g/m² und 3 g/m², vorzugsweise von 1 g/m² resultiert.

8. Verfahren nach einem der vorhergehenden Ansprüche,
**dadurch gekennzeichnet,**
**dass** als photokatalytisch wirksame Substanz, insbesondere nanoskaliges, o-berflächenbehandeltes Titandioxid, bevorzugt in Form von Primärteilchen verwendet wird.

9. Verfahren nach einem der vorhergehenden Ansprüche,
**dadurch gekennzeichnet,**
**dass** der Decklack unmittelbar auf das Substrat (2) aufgebracht wird oder auf mindestens einen zuvor auf das Substrat (2) aufgebrachten, vorzugsweise abrasive Partikel umfassenden Basislack.

10. Verfahren nach Anspruch 9,
**dadurch gekennzeichnet,**
**dass** der Basislack ein strahlenhärtbares Bindemittel enthält und vor dem Auftragen des Decklacks vorvernetzt, nicht ausgehärtet oder alternativ ausgehärtet wird.

11. Schichtanordnung (1), vorzugsweise hergestellt nach einem Verfahren nach einem der vorhergehenden Ansprüche, umfassend eine photokatalytisch wirksame Funktionsschicht (4) als eine äußerste Schicht, eine Decklackschicht (3) und ein dekoratives oder transparentes Substrat (2),
**dadurch gekennzeichnet,**
**dass** die Decklackschicht (3) und die Funktionsschicht (4) jeweils strahlengehärtetes Bindemittel umfassen und dass die Bindemittel von Funktionsschicht (4) und Decklackschicht (3) miteinander vernetzt sind, und dass die Funktionsschicht (4) eine koronabehandelte und/oder plasmabehandelte Schicht ist und dass dadurch an der Oberfläche photokatalytische Pigmente der Funktionsschicht freigelegt sind.

12. Verwendung einer Schichtanordnung (1) nach Anspruch 11 zur Beschichtung von Oberflächen, insbesondere Möbeln, Arbeitsflächen, Fußböden, insbesondere Laminaten, oder Fenstern.

## Claims

1. Method for producing a plate-, sheet- or web-type layer arrangement having a photocatalytically active functional layer (4), having the steps:
providing a decorative or transparent substrate to be coated;
applying a solvent-free finishing lacquer, comprising a radiation-curable binding agent, for generating a finishing lacquer layer (3);
applying a functional lacquer comprising an aqueous, dryable as well as radiation-curable binding agent for generating the photocatalytically active functional layer (4);
mutually irradiating the finishing lacquer and the functional lacquer and thereby further crosslinking, in particular curing, the respective radiation-curable binding agent,
**characterised in that**
the radiation-curable binding agent of the finishing lacquer is pre-crosslinked by irradiating, however not cured, and the functional lacquer is physically dried before the mutual irradiation of the finishing lacquer of the functional lacquer, and
before the curing, the dried functional lacquer is subjected to a surface treatment in the form of a corona treatment and/or a plasma treatment, during which the binding agent of the dried functional lacquer is removed.

2. Method according to Claim 1,
**characterised in that**
the finishing lacquer comprises photoinitiators and the pre-crosslinking occurs by means of UV irradiation and/or the pre-crosslinking occurs by means of electron irradiation.

3. Method according to any one of Claims 1 or 2,
**characterised in that**
the finishing lacquer contains photoinitiators and the curing occurs by means of UV irradiation and/or the curing occurs by means of electron irradiation.

4. Method according to any one of the preceding claims,
**characterised in that**
the functional lacquer is thermally dried such that it is non-adhesive, in particular to a residual moisture content of less than 5% by weight, preferably less than 4% by weight, even more preferably less than 3% by weight, particularly preferably less than 2% by weight, more particularly preferably less than 1% by weight, with regard to the weight of the applied functional lacquer respectively.

5. Method according to any one of the preceding claims,
**characterised in that**
the substrate (2) is provided as a paper web, plastic web, metal web, laminate web or as a paper plate, wooden material plate, plastic plate, metal plate or laminate plate.

6. Method according to any one of the preceding claims,
**characterised in that**
the application of the finishing lacquer, the pre-crosslinking, the application of the functional lacquer, the drying as well as the curing is implemented inline.

7. Method according to any one of the preceding claims,
**characterised in that**
the functional lacquer contains a quantity of catalytic substance and is applied in such a thickness that a quantity of the substance per unit of surface area results between approx. 0.2g/m² and 3g/m², preferably of 1g/m².

8. Method according to any one of the preceding claims,
**characterised in that**
in particular nanoscale, surface-treated titanium dioxide, preferably in the form of primary particles, is used as a photocatalytically active substance.

9. Method according to any one of the preceding claims,
**characterised in that**
the finishing lacquer is applied directly to the substrate (2) or to at least one base lacquer previously applied to the substrate (2) and preferably comprising abrasive particles.

10. Method according to Claim 9,
**characterised in that**
the base lacquer contains a radiation-curable binding agent and, before the application of the finishing lacquer, is pre-crosslinked, not cured or alternatively cured.

11. Layer arrangement (1), preferably produced according to a method according to any one of the preceding claims, comprising a photocatalytically active functional layer (4) as an outermost layer, a finishing lacquer layer (3) and a decorative or transparent substrate (2),
**characterised in that**
the finishing lacquer layer (3) and the functional layer (4) comprise radiation-curable binding agents respectively and the binding agents of functional layer (4) and finishing lacquer layer (3) are crosslinked with each other, and the functional layer (4) is a corona-treated and/or plasma-treated layer and photocatalytic pigments of the functional layer are thereby exposed on the surface.

12. Use of a layer arrangement (1) according to Claim 11 for coating surfaces, in particular furniture, work surfaces, flooring, in particular laminates, or windows.

## Revendications

1. Procédé de fabrication d'un ensemble de couches en forme de plaque, de feuille ou de bande, doté d'une couche fonctionnelle (4) à effet photo-catalytique, comprenant les étapes:
- mise à disposition d'un substrat décoratif ou transparent, destiné à être revêtu,
- application d'une laque de finition exempte de solvant, comprenant un liant pouvant être durci par rayonnement, pour la réalisation d'une couche de laque de finition (3),
- application d'une laque fonctionnelle, comprenant une substance à effet photo-catalytique, ainsi qu'un liant aqueux, pouvant être séché ainsi que durci par rayonnement, pour réaliser une couche fonctionnelle à effet photo-catalytique (4),
- irradiation en commun de la laque de finition et de la laque fonctionnelle et, de ce fait, réticulation plus avancée, en particulier durcissement par rayonnement du liant respectif pouvant être durci par rayonnement, **caractérisé en ce que** le liant de la laque de finition pouvant être durci par rayonnement est pré-réticulé par rayonnement mais pas durci, et que la laque fonctionnelle est séchée physiquement avant l'irradiation en commun de la laque de finition et de la laque fonctionnelle, et
q u e la laque fonctionnelle séchée est soumise, avant le durcissement, à un traitement de surface sous la forme d'un traitement par effet corona et / ou d'un traitement par plasma, au cours duquel le liant de la laque fonctionnelle est éliminé.

2. Procédé selon la revendication 1, **caractérisé en ce que** la laque de finition contient des photo-initiateurs et que la pré-réticulation est effectuée par irradiation aux rayons UV et / ou que la pré-réticulation est effectuée par irradiation aux électrons.

3. Procédé selon revendication 1 ou 2, **caractérisé en ce que** la laque de finition contient des photo-initiateurs et que le durcissement est effectué par irradiation aux rayons UV et / ou que le durcissement est effectué par irradiation aux électrons.

4. Procédé selon l'une des revendications précédentes,
**caractérisé en ce que** la laque fonctionnelle est séchée thermiquement de manière à ce qu'elle soit exempte de collant, en particulier à une teneur en humidité résiduelle inférieure à 5 % en poids, de préférence inférieure à 4 % en poids, encore plus préférentiellement inférieure à 3 % en poids, en particulier inférieure de préférence à 2 % en poids, tout particulièrement préférentiellement inférieure à 1 % en poids, chaque fois par rapport au poids de la laque fonctionnelle appliquée.

5. Procédé selon l'une des revendications précédentes,
**caractérisé en ce que** le substrat (2) est mis à disposition sous la forme de bande de papier, de bande de matière synthétique, de bande de métal, de bande de laminé ou sous la forme de plaque de papier, de plaque de matériau à base de bois, de plaque de matière synthétique, de plaque de métal ou de plaque de laminé.

6. Procédé selon l'une des revendications précédentes,
**caractérisé en ce que** l'application de la laque de finition, la pré-réticulation, l'application de la laque fonctionnelle, le séchage ainsi que le durcissement sont exécutés en ligne.

7. Procédé selon l'une des revendications précédentes
**caractérisé en ce que** la laque fonctionnelle contient une telle quantité de substance catalytique et est appliquée en une telle épaisseur que la quantité de substance catalytique en résultant se trouve située entre environ 0,2 g/m2 et 3 g/m2, de préférence qu'elle soit de 1g/m2.

8. Procédé selon l'une des revendications précédentes,
**caractérisé en ce que**, comme substance à effet photo-catalytique, on utilise en particulier de l'oxyde titanique nanométrique, traité en surface, de préférence sous la forme de particules primaires.

9. Procédé selon l'une des revendications précédentes,
**caractérisé en ce que** la laque de finition est appliquée directement sur le substrat (2) ou sur au moins une laque de base qui, contenant de préférence des particules abrasives, est appliquée auparavant sur le substrat (2).

10. Procédé selon la revendication 9, **caractérisé en ce que** la laque de base contient un liant pouvant être durci par rayonnement et est pré-réticulé, pas durci ou alternativement durci, avant l'application de la laque de finition.

11. Ensemble de couches (1), fabriqué de préférence selon un procédé selon l'une des revendications précédentes, qui comprend une couche fonctionnelle à effet photo-catalytique (4) en tant que couche extérieure, une couche de laque de finition (3) et un substrat décoratif ou transparent (2),
**caractérisé en ce que** la couche de laque de finition (3) et la couche fonctionnelle (4) contiennent chacune des liants pouvant être durcis par rayonnement et que les liants de la couche fonctionnelle (4) et de la couche de laque de finition (3) sont réticulés ensemble et que la couche fonctionnelle (4) est une couche traitée par effet corona et / ou traitée par plasma, et que, de ce fait, des pigments photo-catalytiques de la couche fonctionnelle sont libérés sur la surface.

12. Utilisation d'un ensemble de couches (1) selon la revendication 11 pour le revêtement de surfaces, en particulier de meubles, de plans de travail, de sols, en particulier de laminés, ou de fenêtres.
